# EUROPÄISCHE PATENTSCHRIFT

(11) **EP 3 993 960 B1**
(45) Veröffentlichungstag und Bekanntmachung des Hinweises auf die Patenterteilung: **12.11.2025**
(21) Anmeldenummer: 20764038.4
(22) Anmeldetag: 18.08.2020
(51) Int. Cl.: B25J 9/16, G05B 19/4061

(54) **ANHALTEN EINER PRODUKTIONSMASCHINE AUF KOLLISIONSFREIER BAHN**
STOPPING OF A PRODUCTION MACHINE ON A COLLISION-FREE WEB
ARRÊT D'UNE MACHINE DE PRODUCTION SUR UNE VOIE SANS COLLISION

(30) Priorität: 27.09.2019 EP 19200160
(43) Veröffentlichungstag der Anmeldung: 11.05.2022
(73) Patentinhaber: Siemens Aktiengesellschaft, 80333 München (DE)
(72) Erfinder: HANDECK, Jörg, 91058 Erlangen (DE); MIHATSCH, Steffen, 71272 Renningen (DE); SCHMAUDER, Steffen, 71272 Renningen (DE); STURM, Martin, 71272 Renningen (DE)
(74) Vertreter: Siemens Patent Attorneys
(86) Internationale Anmeldenummer: PCT/EP2020/073097
(87) Internationale Veröffentlichungsnummer: WO 2021/058201

(56) Entgegenhaltungen:
- WO-A2-2006/029432
- DE-B3- 102018 203 078

## Beschreibung

Die vorliegende Erfindung geht aus von einem Betriebsverfahren für eine numerische Steuerung, wobei die numerische Steuerung ein Systemprogramm abarbeitet, wobei die numerische Steuerung unter Abarbeitung des Systemprogramms
a) unter Verwertung von Vorgaben für lagegeregelte Achsen einer von der numerischen Steuerung gesteuerten Produktionsmaschine eine aktuelle Gruppe von Lagesollwerten der lagegeregelten Achsen ermittelt,
b) prüft, ob beim Ansteuern der lagegeregelten Achsen mit der aktuellen Gruppe von Lagesollwerten der lagegeregelten Achsen die Gefahr einer Kollision mindestens eines durch das Ansteuern der lagegeregelten Achsen bewegten Elements mit mindestens einem anderen Element besteht,
c) dann, wenn sie im Schritt b) keine Gefahr einer Kollision erkennt, die lagegeregelten Achsen mit der aktuellen Gruppe von Lagesollwerten der lagegeregelten Achsen ansteuert und das Betriebsverfahren beginnend mit dem Schritt a) wiederholt und,
d) dann, wenn sie im Schritt b) die Gefahr einer Kollision erkennt, die lagegeregelten Achsen in den Stillstand überführt,

Die vorliegende Erfindung geht weiterhin aus von einem Systemprogramm für eine numerische Steuerung, wobei das Systemprogramm Maschinencode umfasst, der von der numerischen Steuerung abarbeitbar ist, wobei die Abarbeitung des Maschinencodes durch die numerische Steuerung bewirkt, dass die numerische Steuerung ein derartiges Betriebsverfahren ausführt.

Die vorliegende Erfindung geht weiterhin aus von einer numerischen Steuerung, wobei die numerische Steuerung mit einem derartigen Systemprogramm programmiert ist, so dass die numerische Steuerung ein derartiges Betriebsverfahren ausführt. Die vorliegende Erfindung geht weiterhin aus von einer Produktionsmaschine,
- wobei die Produktionsmaschine mehrere lagegeregelte Achsen aufweist, mittels derer ein Element der Produktionsmaschine verfahrbar ist,
- wobei die Produktionsmaschine eine derartige numerische Steuerung aufweist, von der die lagegeregelten Achsen angesteuert werden.

Numerische Steuerungen, die zugehörigen Produktionsmaschinen und die Betriebsweisen für numerische Steuerungen und Produktionsmaschinen sind allgemein bekannt.

Beim Betrieb von Produktionsmaschinen - beispielsweise Werkzeugmaschinen, Robotern oder anderen Bearbeitungsmaschinen - besteht die Gefahr, dass bewegte Elemente der Produktionsmaschine mit anderen bewegten Elementen oder unbewegten Elementen der Produktionsmaschine kollidieren. Im Falle der Ausgestaltung der Produktionsmaschine als Werkzeugmaschine kann unter Umständen auch ein Kontakt eines Werkzeugs einer Werkzeugmaschine mit dem zu bearbeitenden Werkstück eine Kollision darstellen. Ungewollte Kollisionen können zu Schäden der miteinander kollidierenden Elemente führen, beispielsweise zu einem Abbrechen eines Werkzeugs, einem Verbiegen eines Haltearms, einem Zerkratzen eines Werkstücks und anderen mehr. Oftmals sind derartige Kollisionen auch mit Ausfallzeiten der Produktionsmaschine verbunden.

Der Grund für die Kollision kann verschiedene Ursachen haben. Beispielsweise kann die Produktionsmaschine falsch programmiert worden sein. Auch ist es möglich, dass Elemente manuell unkorrekt montiert wurden, beispielsweise bei einer Werkzeugmaschine ein Werkstück in einer Aufspannung. Eine weitere mögliche Ursache ist eine fehlerhafte Vorgabe einer Verfahrbewegung durch eine Bedienperson.

Zur Vermeidung von Kollisionen sind viele softwaregestützte Systeme bekannt. Sie basieren auf verschiedenen Ansätzen, umfassen aber stets eine Modellierung der Produktionsmaschine im dreidimensionalen Raum und berücksichtigen die Abmessungen der verschiedenen Elemente der Produktionsmaschine und deren Kinematik. Die bekannten Systeme sind in der Lage, in einer Vielzahl von Situationen Kollisionen zu vermeiden. Die Systeme des Standes der Technik weisen jedoch insbesondere Mängel bei der Verarbeitung von Echtzeitereignissen auf, welche während der Abarbeitung eines Teileprogramms oder dergleichen sozusagen in letzter Sekunde zu einer unerwarteten, spontanen Bewegung führen können. Ursache für derartige Bewegungen können beispielsweise sogenannte asynchrone Bewegungen, Synchronaktionen, gekoppelte Bewegungen und Benutzereingaben (insbesondere im sogenannten JOG-Modus) sein. Auch andere Ursachen sind möglich.

Im Stand der Technik ist bekannt, derartige Echtzeitereignisse im Rahmen der vorausschauenden Ermittlung der Gefahr einer Kollision überhaupt nicht zu berücksichtigen. Vielmehr werden sie erst dann berücksichtigt, wenn sie tatsächlich auftreten. In diesem Fall wird das Risiko, dass ein Echtzeitereignis zu einer Kollision führt, schlichtweg in Kauf genommen.

Im Stand der Technik ist weiterhin bekannt, derartige Echtzeitereignisse dadurch zu berücksichtigen, dass die Elemente der Produktionsmaschine einen Mindestabstand voneinander einhalten müssen. Werden Bewegungen vorgegeben, bei denen der Mindestabstand unterschritten wird, wird entweder die jeweilige Bewegung nicht zugelassen oder es wird zumindest die Verfahrgeschwindigkeit reduziert. Durch diese Vorgehensweise können zwar auch bei Auftreten von Echtzeitereignissen Kollisionen vermieden werden. Diese Lösung weist jedoch den Nachteil auf, dass Bewegungen, die als solche zwar keine Kollision verursachen, bei denen aber der Mindestabstand unterschritten wird, nicht oder zumindest nur mit reduzierter Geschwindigkeit und damit reduzierter Produktivität möglich sind. Die Möglichkeiten der Produktionsmaschine können also, soweit es die Annäherung von Elementen der Produktionsmaschine aneinander oder an andere Elemente betrifft, nicht oder nur mit verringerter Produktivität genutzt werden.

Wird die Gefahr einer Kollision erkannt, erfolgt im Stand der Technik in der Regel ein sogenanntes unkontrolliertes Bremsen. Bei dieser Art des Bremsens wird jede lagegeregelte Achse unabhängig von den anderen lagegeregelten Achsen so schnell wie möglich in den Stillstand überführt. Mit dieser Vorgehensweise können Kollisionen nur dann mit Sicherheit vermieden werden, wenn die Elemente der Produktionsmaschine stets einen Mindestabstand voneinander einhalten müssen.

Aus der Druckschrift WO 2006/029432 A2 ist ein Verfahren zur Kollisionsvermeidung eines entlang wenigstens zweier Achsen relativ zu einem Hindernis bewegbaren Teils bekannt, wobei die Achsen je einen Vorschubantrieb aufweisen, wobei in vorgegebenen Zeitintervallen wiederholt aus relativen Orts- und Geschwindigkeitsdaten des bewegten Teils ein minimaler Anhalteweg in Abhängigkeit von den hierfür erforderlichen Maschinen- und Teiledaten ermittelt und der Kollisionsberechnung zugrunde gelegt wird. Um vorteilhafte Verfahrensbedingungen zu schaffen, wird vorgeschlagen, dass der Kollisionsberechnung wenigstens eine Komponente, von den auf die einzelnen Achsen bezogenen Komponenten des Anhaltewegs, zugrunde gelegt wird, welche Komponente sich aus den in den einzelnen Zeitintervallen abgefragten, um eine maximale Beschleunigung des zugehörigen Vorschubantriebs zumindest während des Abfragezeitintervalls veränderten Geschwindigkeitsdaten ermittelt.

Aus der Druckschrift DE 10 2018 203 078 B3 ist ein Verfahren zum automatischen Erzeugen einer Bewegungstrajektorie eines Bezugspunktes einer automatisch anzusteuernden Maschine bekannt, wobei die Maschine Antriebe aufweist, die ausgebildet sind, den Bezugspunkt der Maschine im Raum zu bewegen und zwar angesteuert durch eine Steuervorrichtung, die ausgebildet ist, die Antriebe der Maschine auf Grundlage der automatisch erzeugten Bewegungstrajektorie als Führungsgröße mittels einer Bewegungssteuerung anzusteuern, wobei die Bewegungstrajektorie auf Grundlage wenigstens einer in einem Überschleifmodus auszuführenden ersten Bewegungsanweisung und wenigstens einer der ersten Bewegungsanweisung folgenden zweiten Bewegungsanweisung eines von der Steuervorrichtung ausführenden Maschinenbewegungsprogramms mittels eines Bahnplanungsprogramms automatisch erzeugt wird.

Die Aufgabe der vorliegenden Erfindung besteht darin, Möglichkeiten zu schaffen, mittels derer die Produktivität der Produktionsmaschine optimiert werden kann und dennoch trotz der Berücksichtigung von Echtzeitereignissen bei der Ermittlung der Lagesollwerte eine Kollision von Elementen der Produktionsmaschine im Betrieb mit an Sicherheit grenzender Wahrscheinlichkeit vermieden werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 4.

Erfindungsgemäß wird ein Betriebsverfahren für eine numerische Steuerung der eingangs genannten Art geschaffen, bei dem die numerische Steuerung unter Abarbeitung des Systemprogramms
a) unter Verwertung von Vorgaben für lagegeregelte Achsen einer von der numerischen Steuerung gesteuerten Produktionsmaschine eine aktuelle Gruppe von Lagesollwerten der lagegeregelten Achsen ermittelt und weiterhin für einen Prognosehorizont erwartete Gruppen von Lagesollwerten der lagegeregelten Achsen ermittelt,
b) sowohl prüft, ob beim Ansteuern der lagegeregelten Achsen mit der aktuellen Gruppe von Lagesollwerten der lagegeregelten Achsen die Gefahr einer Kollision mindestens eines durch das Ansteuern der lagegeregelten Achsen bewegten Elements mit mindestens einem anderen Element besteht, als auch prüft, ob beim Ansteuern der lagegeregelten Achsen mit den erwarteten Gruppen von Lagesollwerten der lagegeregelten Achsen die Gefahr einer Kollision mindestens eines durch das Ansteuern der lagegeregelten Achsen bewegten Elements mit mindestens einem anderen Element besteht,
c) dann, wenn sie im Schritt b) keine Gefahr einer Kollision erkennt, die lagegeregelten Achsen mit der aktuellen Gruppe von Lagesollwerten der lagegeregelten Achsen ansteuert, die erwarteten Gruppen von Lagesollwerten der lagegeregelten Achsen in einem Bremsbahnspeicher speichert und das Betriebsverfahren beginnend mit dem Schritt a) wiederholt und
d) dann, wenn sie im Schritt b) die Gefahr einer Kollision erkennt, die lagegeregelten Achsen entlang einer Bahn in den Stillstand überführt, die durch im Bremsbahnspeicher gespeicherte Gruppen von Lagesollwerten der lagegeregelten Achsen definiert ist, wobei wenn sich die Vorgaben derart ändern, dass eine neue Bahn mit einer neuen aktuellen Gruppe von Lagesollwerten der lagegeregelten Achsen und neuer zu erwartender Gruppen von Lagesollwerten der lagegeregelten Achsen neu ermittelt und eine alte Bahn, wie sie durch den Inhalt des Bremsbahnspeichers in Form einer alten aktuellen Gruppe von Lagesollwerten der lagegeregelten Achsen und alter zu erwartender Gruppen von Lagesollwerten der lagegeregelten Achsen definiert ist, nicht mehr vollständig von der neuen Bahn umfasst ist, für den Fall, dass bei der neuen Bahn bei der Überprüfung eine Kollision erkannt wird, die im Bremsbahnspeicher gespeicherten Gruppen von Lagesollwerten der lagegeregelten Achsen von der numerischen Steuerung entsprechend ihrer Reihenfolge nacheinander aus dem Bremsbahnspeicher ausgelesen und zur Ansteuerung der lagegeregelten Achsen verwendet werden.

Denn dann erfolgt, wenn die numerische Steuerung die Gefahr einer Kollision erkennt, ein Abbremsen entlang einer Bahn, die bereits zuvor auf die Gefahr einer Kollision überprüft wurde und bei der keine Gefahr einer Kollision erkannt wurde. Somit kann das Überführen in den Stillstand entlang einer Bahn erfolgen, auf der keine Kollision auftritt.

In aller Regel steuert die numerische Steuerung die lagegeregelten Achsen mit einem Zeittakt jeweils erneut mit einer jeweils aktuellen Gruppe von Lagesollwerten an. Es ist möglich, dass die Leistungsfähigkeit (Performanz) der numerischen Steuerung so hoch ist, dass die numerische Steuerung die Schritte a) bis c) nahezu instantan (insbesondere innerhalb eines einzelnen Zeittaktes) ausführt. In diesem Fall müssen über die erfindungsgemäßen Schritte hinaus keine besonderen Maßnahmen ergriffen werden. Es ist jedoch auch möglich, dass die numerische Steuerung für die Ausführung der Schritte a) bis c) - insbesondere für die Ausführung des Schrittes b) mehrere Zeittakte benötigt. Konkret kann die numerische Steuerung hierfür maximal eine erste Anzahl von Zeittakten benötigen. In diesem Fall verzögert die numerische Steuerung das Speichern der erwarteten Gruppen von Lagesollwerten in dem Bremsbahnspeicher und das Ansteuern der lagegeregelten Achsen, gerechnet ab der Ermittlung einer neuen aktuellen Gruppe von Lagesollwerten, vorzugsweise um eine zweite Anzahl von Zeittakten. Dadurch wird erreicht, dass die "alte", bereits auf Kollisionsfreiheit geprüfte Bahn beibehalten wird, bis die "neue" Bahn vollständig auf Kollisionsfreiheit geprüft ist. Erst wenn keine Gefahr einer Kollision erkannt wird, wird die "alte" Bahn durch die "neue" Bahn ersetzt. Wird die Gefahr einer Kollision erkannt, erfolgt ein Überführen in den Stillstand auf der "alten" Bahn.

Die zweite Anzahl von Zeittakten ist vorzugsweise derart bemessen, dass die numerische Steuerung in der Lage ist, während der zweiten Anzahl von Zeittakten für den gesamten Prognosehorizont zu prüfen, ob beim Ansteuern der lagegeregelten Achsen mit den erwarteten Gruppen von Lagesollwerten die Gefahr einer Kollision mindestens eines durch das Ansteuern der lagegeregelten Achsen bewegten Elements mit mindestens einem anderen Element besteht. Dadurch kann gewährleistet werden, dass die Prüfung der erwarteten Bahn abgeschlossen ist, bevor die lagegeregelte Achse mit der zugehörigen aktuellen Gruppe von Lagesollwerten angesteuert werden.

Zum Verzögern der Ansteuerung der lagegeregelten Achsen kann die numerische Steuerung beispielsweise die jeweils neu ermittelte aktuelle Gruppe von Lagesollwerten zu einem Speicherzeitpunkt in einen Pufferspeicher einspeichern und zu einem Auslesezeitpunkt aus dem Pufferspeicher auslesen.

Es ist möglich, dass die zweite Anzahl von Zeittakten eine statische Größe ist. In diesem Fall kann die zweite Anzahl von Zeittakten insbesondere unter Berücksichtigung der Dynamik der lagegeregelten Achsen, also der maximal möglichen Verfahrgeschwindigkeiten und der maximal möglichen Beschleunigungen ermittelt werden. Alternativ ist es möglich, dass die numerische Steuerung die zweite Anzahl von Zeittakten in Abhängigkeit von einer Verfahrgeschwindigkeit mindestens einer der lagegeregelten Achsen dynamisch einstellt. In diesem Fall erfolgt also die Einstellung der zweiten Anzahl von Zeittakten unter Berücksichtigung der tatsächlichen Verfahrgeschwindigkeit und der maximal möglichen Beschleunigungen der lagegeregelten Achsen.

Die Aufgabe wird weiterhin durch ein Computerprogrammprodukt mit den Merkmalen des Anspruchs 5 gelöst. Erfindungsgemäß wird ein Systemprogramm der eingangs genannten Art derart ausgestaltet, dass die Abarbeitung des Maschinencodes durch die numerische Steuerung bewirkt, dass die numerische Steuerung ein erfindungsgemäßes Betriebsverfahren ausführt.

Die Aufgabe wird weiterhin durch eine numerische Steuerung mit den Merkmalen des Anspruchs 6 gelöst. Erfindungsgemäß wird eine numerische Steuerung der eingangs genannten Art mit einem erfindungsgemäßen Systemprogramm programmiert, so dass die numerische Steuerung ein erfindungsgemäßes Betriebsverfahren ausführt.

Die Aufgabe wird weiterhin durch eine Produktionsmaschine mit den Merkmalen des Anspruchs 7 gelöst. Erfindungsgemäß ist die numerische Steuerung einer Produktionsmaschine der eingangs genannten Art erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine,
- FIG 2: ein Ablaufdiagramm,
- FIG 3: ein Ortsdiagramm und
- FIG 4: ein Geschwindigkeitsdiagramm.

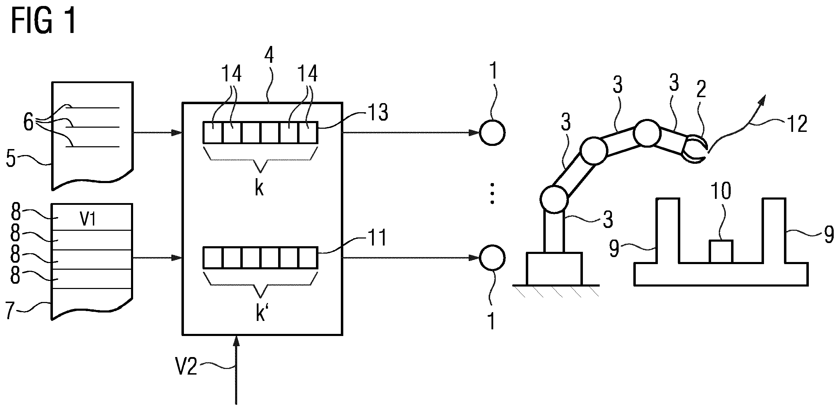

Gemäß FIG 1 weist eine Produktionsmaschine mehrere lagegeregelte Achsen 1 auf. Rein beispielhaft ist in FIG 1 ein Roboter dargestellt. Die Produktionsmaschine könnte aber auch andersartig ausgebildet sein, beispielsweise als Werkzeugmaschine oder als Handhabungsmaschine.

Mittels der lagegeregelten Achsen 1 wird ein Element 2 der Produktionsmaschine verfahren. Die Anzahl an lagegeregelten Achsen 1 kann nach Bedarf sein. Oftmals sind drei bis acht lagegeregelte Achsen 1 vorhanden. Bezüglich der Verfahrbewegung wird in der Regel nur das "eigentlich gewünschte" Element 2 betrachtet, beispielsweise bei dem dargestellten Roboter ein Greifer. Genau genommen müssten auch alle Zwischenglieder 3 mit betrachtet werden, die zur Bewegung des eigentlich gewünschten Elements 2, hier also des Greifers, erforderlich sind.

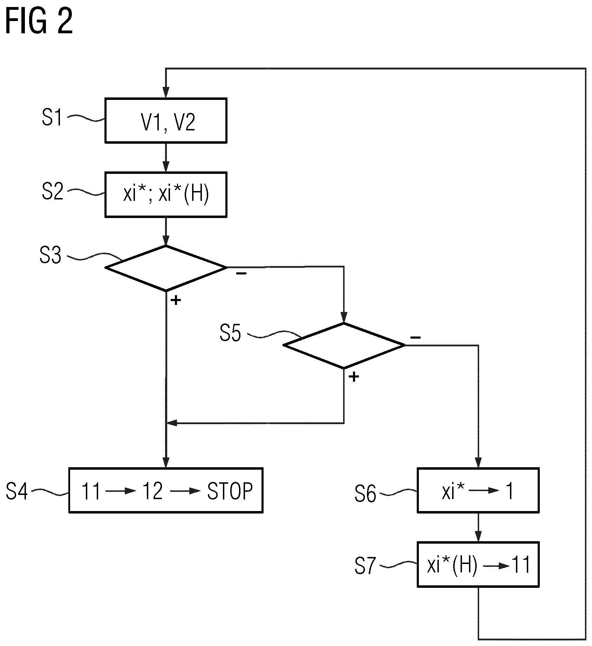

Die Produktionsmaschine weist weiterhin eine numerische Steuerung 4 auf. Mittels der numerischen Steuerung 4 werden die lagegeregelten Achsen 1 angesteuert und dadurch das Element 2 verfahren. Die numerische Steuerung 4 ist mit einem Systemprogramm 5 programmiert. Das Systemprogramm 5 umfasst Maschinencode 6. Aufgrund der Programmierung der numerischen Steuerung 4 mit dem Systemprogramm 5 arbeitet die numerische Steuerung 4 den Maschinencode 6 ab. Die Abarbeitung des Maschinencodes 6 durch die numerische Steuerung 4 bewirkt, dass die numerische Steuerung 4 ein Betriebsverfahren ausführt, das nachstehend in Verbindung mit FIG 2 näher erläutert wird. Die numerische Steuerung 4 führt das nachstehend erläuterte Betriebsverfahren also unter Abarbeitung des Systemprogramms 5 aus.

Zuerst nimmt die numerische Steuerung 4 in einem Schritt S1 Vorgaben V1, V2 entgegen. Die Vorgaben V1, V2 können der numerischen Steuerung 4 teilweise oder vollständig vorab bekannt sein, d.h. prinzipiell lange Zeit vor der Ansteuerung der lagegeregelten Achsen 1. Beispielsweise kann der numerischen Steuerung 4 ein Teileprogramm 7 (siehe FIG 1) vorgegeben sein und können die Vorgaben V1 durch Befehlssätze 8 des Teileprogramms 7 definiert sein. Die Vorgaben V1, V2 können der numerischen Steuerung 4 aber auch instantan vorgegeben werden, beispielsweise durch eine Bedienperson (nicht dargestellt) in Form direkter Vorgaben V2.

In einem Schritt S2 ermittelt die numerische Steuerung 4 eine aktuelle Gruppe von Lagesollwerten xi* (mit i = 1, 2, ... n, wobei n die Anzahl an lagegeregelten Achsen 1 ist). Die aktuelle Gruppe von Lagesollwerten xi* ist diejenige Gruppe von Lagesollwerten xi*, mit der die lagegeregelten Achsen 1 aktuell angesteuert werden sollen. Die numerische Steuerung 4 verwertet bei der Ermittlung der aktuellen Gruppe von Lagesollwerten xi* die Vorgaben V1, V2. Die Lagesollwerte xi* können auf ein gemeinsames Koordinatensystem bezogen sein. In diesem Fall müssen eventuell die korrespondierenden Ansteuerwerte für die lagegeregelten Achsen 1 mittels einer kinematischen Transformation ermittelt werden. Alternativ können die Lagesollwerte xi* direkt und unmittelbar die Ansteuerwerte für die einzelnen lagegeregelten Achsen 1 sein. In jedem Fall sind die Lagesollwerte xi* der jeweiligen Gruppe auf einen einheitlichen Zeitpunkt bezogen. Sie werden also zur gleichen Zeit an die lagegeregelten Achsen 1 ausgegeben.

Die numerische Steuerung 4 führt ihre gesamte Betriebsweise getaktet aus. Mit jedem Zeittakt T wird also jeweils eine neue aktuelle Gruppe von Lagesollwerten xi* an die lagegeregelten Achsen 1 ausgegeben. Der Zeittakt T kann nach Bedarf sein. Beispielsweise kann er bei 4 ms oder 2 ms oder auch 250 µs oder 125 µs liegen.

Die numerische Steuerung 4 ermittelt im Schritt S2 nicht nur die aktuelle Gruppe von Lagesollwerten xi*, sondern zusätzlich auch mehrere erwartete Gruppen von Lagesollwerten xi*, also eine zeitliche Abfolge von Gruppen von Lagesollwerten xi*. Die Anzahl k an ermittelten erwarteten Gruppen von Lagesollwerten xi* korrespondiert somit mit einem Prognosehorizont H = kT. Die erwarteten Gruppen von Lagesollwerten xi* würden zu späteren Zeitpunkten als die aktuelle Gruppe von Lagesollwerten xi* an die lagegeregelten Achsen 1 ausgegeben, sofern sich nicht aufgrund geänderter Vorgaben V1, V2 Abweichungen ergeben. Die erwarteten Gruppen von Lagesollwerten xi* sind also von ihrer Art her völlig analog zu der aktuellen Gruppe von Lagesollwerten xi*. Deshalb wird auch dasselbe Bezugszeichen verwendet.

In einem Schritt S3 prüft die numerische Steuerung 4, ob beim Ansteuern der lagegeregelten Achsen 1 mit der im Schritt S2 ermittelten aktuellen Gruppe von Lagesollwerten xi* die Gefahr einer Kollision besteht. Hierbei wird geprüft, ob die Gefahr einer Kollision mindestens eines durch das Ansteuern der lagegeregelten Achsen 1 bewegten Elements 2, 3 mit einem anderen Element 2, 3, 9, 10 besteht. Es erfolgt also eine umfassende Prüfung aller bewegten Elemente 2, 3 mit allen anderen in Frage kommenden Elementen 2, 3, 9, 10. Beispielsweise wird geprüft, ob das Element 2 mit einem der Zwischenglieder 3, einem feststehenden Element 9 oder beispielsweise auch (sofern unerwünscht) mit einem Werkstück 10 kollidiert. Auch wird bezüglich der der Zwischenglieder 3 geprüft, ob sie mit einem anderen der Zwischenglieder 3, einem feststehenden Element 9 oder beispielsweise mit dem Werkstück 10 kollidieren. Falls auch das Werkstück 10 bewegt wird, wird auch bezüglich des Werkstücks 10 geprüft, ob es mit einem feststehenden Element 9 kollidiert. Die entsprechenden Prüfungen als solche sind Fachleuten allgemein bekannt und müssen daher nicht im Detail erläutert werden. Beispielsweise können die verschiedenen Elemente 2, 3, 9, 10 durch elementargeometrische Körper modelliert werden, deren Bewegung unter Berücksichtigung der kinematischen Wirkungskette entsprechend der Ansteuerung der einzelnen lagegeregelten Achsen 1 modelliert wird.

Wenn die numerische Steuerung 4 im Schritt S3 erkennt, dass die Gefahr einer Kollision besteht, geht die numerische Steuerung 4 zu einem Schritt S4 über. Im Schritt S4 überführt die numerische Steuerung 4 die lagegeregelten Achsen 1 in den Stillstand. Sie stoppt also die Bewegung, um eine Kollision zu vermeiden. Auf die Details wird später noch eingegangen.

Ergibt die Prüfung keine Gefahr einer Kollision, geht die numerische Steuerung 4 zu einem Schritt S5 über. Im Schritt S5 führt die numerische Steuerung 4 eine zum Schritt S3 völlig analoge Prüfung für die ermittelten erwarteten Gruppen von Lagesollwerten xi* durch. Wenn die numerische Steuerung 4 im Schritt S5 erkennt, dass die Gefahr einer Kollision besteht, geht die numerische Steuerung 4 zum Schritt S4 über. Ergibt die Prüfung keine Gefahr einer Kollision, geht die numerische Steuerung 4 zu einem Schritt S6 über.

Im Schritt S6 steuert die numerische Steuerung 4 die lagegeregelten Achsen 1 mit der aktuellen Gruppe von Lagesollwerten xi* an. Weiterhin speichert die numerische Steuerung 4 die im Schritt S2 ermittelten erwarteten Gruppen von Lagesollwerten xi* in einem Schritt S7 in einem Bremsbahnspeicher 11 ab. Sodann geht die numerische Steuerung 4 zum Schritt S1 zurück.

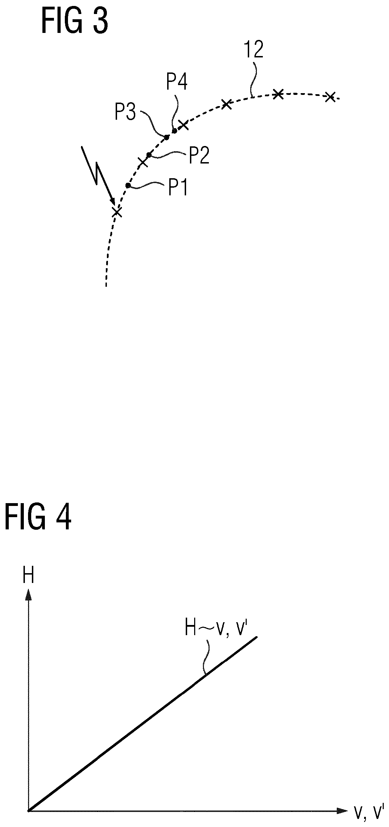

Aufgrund des Umstands, dass die erwarteten Gruppen von Lagesollwerten xi* vor dem Speichern im Bremsbahnspeicher 11 auf Kollisionsfreiheit geprüft wurden und weiterhin die erwarteten Gruppen von Lagesollwerten xi* eine zeitliche Abfolge bilden, definieren die im Bremsbahnspeicher 11 gespeicherten erwarteten Gruppen von Lagesollwerten xi* somit entsprechend der Darstellung in FIG 3 eine Bahn 12, entlang derer keine Kollision droht. Die numerische Steuerung 4 kann daher im Schritt S4 die im Bremsbahnspeicher 11 gespeicherten erwarteten Gruppen von Lagesollwerten xi* auslesen. Basierend auf der durch die ausgelesenen erwarteten Gruppen von Lagesollwerten xi* definierten Bahn 12 kann die numerische Steuerung 4 somit im Rahmen des Schrittes S4 Not-Lagesollwerte für die lagegeregelten Achsen 1 ermitteln, so dass die lagegeregelten Achsen 1 entlang der Bahn 12 in den Stillstand überführt werden. Das Stillsetzen erfolgt somit auf einer "sicheren" im Sinne von kollisionsfreien Bahn 12. Die abgespeicherten erwarteten Gruppen von Lagesollwerten xi* sind in FIG 3 durch kleine Kreuzchen angedeutet. Mit P1 bis P4 sind in FIG 3 weiterhin rein beispielhaft Punkte auf der Bahn 12 angedeutet, die bei einem Stillsetzen der lagegeregelten Achsen 1 von dem Element 2 nach jeweils einem Zeittakt T erreicht sind. Die zugehörigen Lagesollwerte zum Anfahren jeweils eines der Punkte P1 bis P4 entsprechen je einer Gruppe von Not-Lagesollwerten.

Wenn die numerische Steuerung 4 die Gefahr einer Kollision erkennt (in FIG 3 durch ein Blitzzeichen angedeutet) und daher zum Schritt S4 übergeht und die lagegeregelten Achsen 1 in den Stillstand überführt, benötigt die Ausführung des Schrittes S4 eine gewisse Zeitspanne. Während dieser Zeitspanne werden die lagegeregelten Achsen 1 noch verfahren. Vorzugsweise ist der Bremsbahnspeicher 11 derart dimensioniert, dass das Überführen der lagegeregelten Achsen 1 in den Stillstand vor dem Erreichen des Endes der Bahn 12 (wie sie durch die im Bremsbahnspeicher 11 gespeicherten erwarteten Gruppen von Lagesollwerten xi* definiert ist) abgeschlossen ist. Eine entsprechende Dimensionierung des Bremsbahnspeichers 11 ist ohne weiteres möglich. Insbesondere kann der Bremsbahnspeicher 11 eine geeignete Anzahl k' an Speicherplätzen aufweisen.

Es ist möglich, dass die numerische Steuerung 4 die Schritte S3 und S5 während eines einzelnen Zeittaktes T ausführen kann. In diesem Fall kann die Vorgehensweise von FIG 2 sowie obenstehend erläutert direkt und unmittelbar angewendet werden. Es ist jedoch auch möglich, dass die numerische Steuerung 4 zur Ausführung der Schritte S3 und S5 mehrere Zeittakte T benötigt. Die Anzahl an benötigten Zeittakten T kann zwar variieren, es kann aber eine Obergrenze für diese Anzahl angegeben werden. Diese Obergrenze wird nachfolgend als erste Anzahl von Zeittakten T bezeichnet. In diesem Fall wird die Vorgehensweise von FIG 2 dahingehend modifiziert, dass die numerische Steuerung 4 das Speichern der erwarteten Gruppen von Lagesollwerten xi* in dem Bremsbahnspeicher 11 und das Ansteuern der lagegeregelten Achsen 1 um eine Anzahl von Zeittakten T verzögert. Der Zeitraum der Verzögerung wird hierbei gerechnet ab der Ermittlung einer neuen aktuellen Gruppe von Lagesollwerten xi*. Die entsprechende Anzahl von Zeittakten T wird nachfolgend als zweite Anzahl von Zeittakten T bezeichnet.

Theoretisch kann die zweite Anzahl von Zeittakten unabhängig von der ersten Anzahl von Zeittakten T bestimmt werden. In der Praxis aber ist die zweite Anzahl von Zeittakten T vorzugsweise derart bemessen, dass die numerische Steuerung 4 in der Lage ist, während der zweiten Anzahl von Zeittakten T für den gesamten Prognosehorizont H zu prüfen, ob beim Ansteuern der lagegeregelten Achsen 1 mit den erwarteten Gruppen von Lagesollwerten xi* die Gefahr einer Kollision mindestens eines durch das Ansteuern der lagegeregelten Achsen (1) bewegten Elements 2, 3 mit mindestens einem anderen Element 2, 3, 9, 10 besteht. Beispielsweise kann die numerische Steuerung 4 entsprechend der Darstellung in FIG 1 einen Pufferspeicher 13 mit einer Anzahl von Speicherplätzen 14 aufweisen. Die Anzahl von Speicherplätzen 14 korrespondiert in diesem Fall mit der zweiten Anzahl von Zeittakten T. In den Speicherplätzen 14 des Pufferspeichers 13 sind in diesem Fall die nach der aktuellen Gruppe von Lagesollwerten xi* zuerst auszugebende erwartete Gruppe von Lagesollwerten xi*, dann die als nächstes auszugebende erwartete Gruppe von Lagesollwerten xi* usw. gespeichert.

Sofern sich die Vorgaben V1, V2 nicht ändern, muss im Ergebnis nur die letzte neue erwartete Gruppe von Lagesollwerten xi* neu ermittelt und geprüft werden. Dies ist in einem einzelnen Zeittakt T ohne weiteres möglich. Die anderen erwarteten Gruppen von Lagesollwerten xi* können direkt aus der vorherigen Iteration übernommen werden. Für sie ist keine erneute Prüfung erforderlich, da sie bereits geprüft wurden.

Wenn sich die Vorgaben V1, V2 jedoch derart ändern, dass die "alte" Bahn 12, wie sie durch den Inhalt des Bremsbahnspeichers 11 in Form einer "alten" aktueller Gruppe von Lagesollwerten xi* und "alter" zu erwartender Gruppen von Lagesollwerten xi* definiert ist, in Form einer neuen Bahn mit einer "neuen" aktuellen Gruppe von Lagesollwerten xi* und "neuer" zu erwartender Gruppen von Lagesollwerten xi* neu ermittelt werden muss, da die "alte" Bahn nicht mehr vollständig von der "neuen" Bahn umfasst ist, werden für den Fall, dass bei der "neuen" Bahn bei der Überprüfung eine Kollision erkannt wird, die im Bremsbahnspeicher 11 gespeicherten Gruppen von Lagesollwerten xi* (also die "alte" Bahn) von der numerischen Steuerung 4 entsprechend ihrer Reihenfolge nacheinander aus dem Bremsbahnspeicher 11 ausgelesen und zur Ansteuerung der lagegeregelten Achsen 1 verwendet.

Die Berücksichtigung der geänderten Vorgaben V1, V2 wird vorteilhaft verzögert, bis die neue Bahn 12 vollständig auf Kollisionsfreiheit geprüft ist.

Es ist möglich, dass der Prognosehorizont H eine Konstante ist. In diesem Fall ist auch die zweite Anzahl von Zeittakten T und damit die Größe des Pufferspeichers 13 vorzugsweise eine Konstante. Alternativ ist es entsprechend der Darstellung in FIG 4 möglich, dass die numerische Steuerung 4 den Prognosehorizont H in Abhängigkeit von der Verfahrgeschwindigkeit v' mindestens einer der lagegeregelten Achsen 1 dynamisch einstellt. In diesem Fall kann auch eine entsprechende Anpassung der Anzahl an Speicherplätzen 14 des Pufferspeichers 13 erfolgen. Bei der Verfahrgeschwindigkeit v' kann es sich beispielsweise um die Verfahrgeschwindigkeit derjenigen lagegeregelten Achse 1 handeln, welche die größte Zeit zum Anhalten benötigt. Alternativ kann es sich um eine aus der Gesamtheit der Verfahrgeschwindigkeiten der lagegeregelten Achsen 1 insgesamt abgeleitete Verfahrgeschwindigkeit handeln, insbesondere um die Verfahrgeschwindigkeit v, mit welcher das bewegte Element 2 verfahren wird.

Zusammengefasst betrifft die vorliegende Erfindung somit folgenden Sachverhalt:
Eine numerische Steuerung 4 ermittelt unter Verwertung von Vorgaben V1, V2 für lagegeregelte Achsen 1 einer von der numerischen Steuerung 4 gesteuerten Produktionsmaschine eine aktuelle Gruppe von Lagesollwerten xi* und ermittelt weiterhin für einen Prognosehorizont H erwartete Gruppen von Lagesollwerten xi*. Sie prüft, ob beim Ansteuern der lagegeregelten Achsen 1 mit der aktuellen Gruppe von Lagesollwerten xi* die Gefahr einer Kollision mindestens eines durch das Ansteuern der lagegeregelten Achsen 1 bewegten Elements 2, 3 mit mindestens einem anderen Element 2, 3, 9, 10 besteht. Die gleiche Prüfung führt sie für die erwarteten Gruppen von Lagesollwerten xi* durch. Wenn die numerische Steuerung keine Gefahr einer Kollision erkennt, speichert sie die erwarteten Gruppen von Lagesollwerten xi* in einem Bremsbahnspeicher 11 und steuert die lagegeregelten Achsen 1 mit der aktuellen Gruppe von Lagesollwerten xi* an. Diese Vorgehensweise wiederholt die numerische Steuerung 4, solange sie keine Gefahr einer Kollision erkennt. Wenn sie hingegen die Gefahr einer Kollision erkennt, überführt sie die lagegeregelten Achsen 1 entlang einer Bahn 12 in den Stillstand, die durch im Bremsbahnspeicher 11 gespeicherte Gruppen von Lagesollwerten xi* definiert ist.

Die vorliegende Erfindung weist viele Vorteile auf. Insbesondere kann in nahezu allen Fällen ein zuverlässiges Anhalten der Produktionsmaschine ohne die Gefahr einer Kollision erreicht werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine numerische Steuerung (4), wobei die numerische Steuerung (4) ein Systemprogramm (5) abarbeitet, wobei die numerische Steuerung (4) unter Abarbeitung des Systemprogramms (5)
a) unter Verwertung von Vorgaben (V1, V2) für lagegeregelte Achsen (1) einer von der numerischen Steuerung (4) gesteuerten Produktionsmaschine eine aktuelle Gruppe von Lagesollwerten (xi*) der lagegeregelten Achsen (1) ermittelt und weiterhin für einen Prognosehorizont (H) erwartete Gruppen von Lagesollwerten (xi*) der lagegeregelten Achsen (1) ermittelt,
b) sowohl prüft, ob beim Ansteuern der lagegeregelten Achsen (1) mit der aktuellen Gruppe von Lagesollwerten (xi*) der lagegeregelten Achsen (1) die Gefahr einer Kollision mindestens eines durch das Ansteuern der lagegeregelten Achsen (1) bewegten Elements (2, 3) mit mindestens einem anderen Element (2, 3, 9, 10) besteht, als auch prüft, ob beim Ansteuern der lagegeregelten Achsen (1) mit den erwarteten Gruppen von Lagesollwerten (xi*) der lagegeregelten Achsen (1) die Gefahr einer Kollision mindestens eines durch das Ansteuern der lagegeregelten Achsen (1) bewegten Elements (2, 3) mit mindestens einem anderen Element (2, 3, 9, 10) besteht,
c) dann, wenn sie im Schritt b) keine Gefahr einer Kollision erkennt, die lagegeregelten Achsen (1) mit der aktuellen Gruppe von Lagesollwerten (xi*) der lagegeregelten Achsen (1) ansteuert, die erwarteten Gruppen von Lagesollwerten (xi*) der lagegeregelten Achsen (1) in einem Bremsbahnspeicher (11) speichert und das Betriebsverfahren beginnend mit dem Schritt a) wiederholt und
d) dann, wenn sie im Schritt b) die Gefahr einer Kollision erkennt, die lagegeregelten Achsen (1) entlang einer Bahn (12) in den Stillstand überführt, die durch im Bremsbahnspeicher (11) gespeicherte Gruppen von Lagesollwerten (xi*) der lagegeregelten Achsen (1) definiert ist,
**dadurch gekennzeichnet, dass**
wenn sich die Vorgaben (V1, V2) derart ändern, dass eine neue Bahn mit einer neuen aktuellen Gruppe von Lagesollwerten (xi*) der lagegeregelten Achsen (1) und neuer zu erwartender Gruppen von Lagesollwerten (xi*) der lagegeregelten Achsen (1) neu ermittelt wird und eine alte Bahn (12), wie sie durch den Inhalt des Bremsbahnspeichers (11) in Form einer alten aktuellen Gruppe von Lagesollwerten (xi*) der lagegeregelten Achsen (1) und alter zu erwartender Gruppen von Lagesollwerten (xi*) der lagegeregelten Achsen (1) definiert ist, nicht mehr vollständig von der neuen Bahn umfasst ist,
für den Fall, dass bei der neuen Bahn bei der Überprüfung eine Kollision erkannt wird, die im Bremsbahnspeicher (11) gespeicherten Gruppen von Lagesollwerten (xi*) der lagegeregelten Achsen (1) von der numerischen Steuerung (4) entsprechend ihrer Reihenfolge nacheinander aus dem Bremsbahnspeicher (11) ausgelesen und zur Ansteuerung der lagegeregelten Achsen (1) verwendet werden.

2. Betriebsverfahren nach Anspruch 1,
**dadurch gekennzeichnet ,**
**dass** die numerische Steuerung (4) die lagegeregelten Achsen (1) mit einem Zeittakt (T) jeweils erneut mit einer jeweiligen Gruppe von aktuellen Lagesollwerten (xi*) der lagegeregelten Achsen (1) ansteuert, dass die numerische Steuerung (4) zur Ausführung des Schrittes b) maximal eine erste Anzahl von Zeittakten (T) benötigt und dass die numerische Steuerung (4) das Speichern der erwarteten Gruppen von Lagesollwerten (xi*) der lagegeregelten Achsen (1) in dem Bremsbahnspeicher (11) und das Ansteuern der lagegeregelten Achsen (1), gerechnet ab der Ermittlung einer neuen aktuellen Gruppe von Lagesollwerten (xi*) der lagegeregelten Achsen (1), um eine zweite Anzahl von Zeittakten (T) verzögert.

3. Betriebsverfahren nach Anspruch 2,
**dadurch gekennzeichnet ,**
**dass** die zweite Anzahl von Zeittakten (T) derart bemessen ist, dass die numerische Steuerung (4) in der Lage ist, während der zweiten Anzahl von Zeittakten (T) für den gesamten Prognosehorizont (H) zu prüfen, ob beim Ansteuern der lagegeregelten Achsen (1) mit den erwarteten Gruppen von Lagesollwerten (xi*) der lagegeregelten Achsen (1) die Gefahr einer Kollision mindestens eines durch das Ansteuern der lagegeregelten Achsen (1) bewegten Elements (2, 3) mit mindestens einem anderen Element (2, 3, 9, 10) besteht.

4. Betriebsverfahren nach Anspruch 2 oder 3,
**dadurch gekennzeichnet ,**
**dass** die numerische Steuerung (4) die zweite Anzahl von Zeittakten in Abhängigkeit von einer Verfahrgeschwindigkeit (v, v') mindestens einer der lagegeregelten Achsen (1) dynamisch nachführt.

5. Computerprogrammprodukt für eine numerische Steuerung (4), wobei das Systemprogramm Maschinencode (6) umfasst, der von der numerischen Steuerung (4) abarbeitbar ist, wobei die Abarbeitung des Maschinencodes (6) durch die numerische Steuerung (4) bewirkt, dass die numerische Steuerung (4) ein Betriebsverfahren nach einem der obigen Ansprüche ausführt.

6. Numerische Steuerung, wobei die numerische Steuerung mit einem Computerprogrammprodukt nach Anspruch 5 programmiert ist, so dass die numerische Steuerung ein Betriebsverfahren nach einem der Ansprüche 1 bis 4 ausführt.

7. Produktionsmaschine,
- wobei die Produktionsmaschine mehrere lagegeregelte Achsen (1) aufweist, mittels derer mindestens ein Element (2, 3) der Produktionsmaschine verfahrbar ist,
- wobei die Produktionsmaschine eine numerische Steuerung (4) nach Anspruch 6 aufweist, von der die lagegeregelten Achsen (1) angesteuert werden.

## Claims

1. Operating method for a numerical controller (4), wherein the numerical controller (4) executes a system program (5), wherein the numerical controller (4), while executing the system program (5),
a) while utilising specifications (V1, V2) for position-controlled axes (1) of a production machine controlled by the numerical controller (4), ascertains a current group of position setpoint values (xi*) of the position-controlled axes (1) and furthermore ascertains groups of position setpoint values (xi*) of the position-controlled axes (1) expected for a forecast horizon (H),
b) both checks whether, during actuation of the position-controlled axes (1) with the current group of position setpoint values (xi*) of the position-controlled axes (1), there is the risk of a collision of at least one element (2, 3) moved by the actuation of the position-controlled axes (1) with at least one other element (2, 3, 9, 10), and also checks whether, during actuation of the position-controlled axes (1) with the expected group of position setpoint values (xi*) of the position-controlled axes (1), there is the risk of a collision of at least one element (2, 3) moved by the actuation of the position-controlled axes (1) with at least one other element (2, 3, 9, 10),
c) if it does not identify a risk of a collision in step b), actuates the position-controlled axes (1) with the current group of position setpoint values (xi*) of the position-controlled axes (1), stores the expected groups of position setpoint values (xi*) of the position-controlled axes (1) in a braking path memory (11) and repeats the operating method starting with the step a), and
d) if it identifies the risk of a collision in step b), brings the position-controlled axes (1) to a standstill along a path (12) that is defined by groups of position setpoint values (xi*) of the position-controlled axes (1) stored in the braking path memory (11), **characterised in that** if the specifications (V1, V2) change such that a new path with a new current group of position setpoint values (xi*) of the position-controlled axes (1) and new groups of position setpoint values (xi*) of the position-controlled axes (1) to be expected has to be newly ascertained and an old path (12), as defined by the content of the braking path memory (11) in the form of an old current group of position setpoint values (xi*) of the position-controlled axes (1) and old groups of position setpoint values (xi*) of the position-controlled axes (1) to be expected, is no longer fully comprised by the new path, then in the event that a collision is identified in the new path when checking, the groups of position setpoint values (xi*) of the position-controlled axes (1) stored in the braking path memory (11) are read out of the braking path memory (11) by the numerical controller (4) in succession, according to their order, and used to actuate the position-controlled axes (1).

2. Operating method according to claim 1,
**characterised in that**
the numerical controller (4) actuates the position-controlled axes (1) with a time interval (T) again in each case with a respective group of current position setpoint values (xi*) of the position-controlled axes (1), that the numerical controller (4) requires a maximum of a first number of time intervals (T) to carry out step b) and that the numerical controller (4) delays the storage of the expected groups of position setpoint values (xi*) of the position-controlled axes (1) in the braking path memory (11) and the actuation of the position-controlled axes (1), calculated as of the ascertaining of a new current group of position setpoint values (xi*) of the position-controlled axes (1), by a second number of time intervals (T).

3. Operating method according to claim 2,
**characterised in that**
the second number of time intervals (T) is measured such that the numerical controller (4), during the second number of time intervals (T), is capable of checking for the entire forecast horizon (H) whether, when the position-controlled axes (1) are actuated with the expected groups of position setpoint values (xi*) of the position-controlled axes (1), there is the risk of a collision of at least one element (2, 3) moved by the actuation of the position-controlled axes (1) with at least one other element (2, 3, 9, 10).

4. Operating method according to claim 2 or 3,
**characterised in that**
the numerical controller (4) sets the second number of time intervals in a dynamic manner as a function of a displacement speed (v, v') of at least one of the position-controlled axes (1).

5. Computer program product for a numerical controller (4), wherein the system program comprises machine code (6) that can be executed by the numerical controller (4), wherein the execution of the machine code (6) by the numerical controller (4) causes the numerical controller (4) to carry out an operating method according to one of the above claims.

6. Numerical controller, wherein the numerical controller is programmed with a computer program product (5) according to claim 5, so that the numerical controller carries out an operating method according to one of claims 1 to 4.

7. Production machine,
- wherein the production machine has a plurality of position-controlled axes (1), by means of which at least one element (2, 3) of the production machine can be displaced,
- wherein the production machine has a numerical controller (4) according to claim 6, by which the position-controlled axes (1) are actuated.

## Revendications

1. Procédé pour faire fonctionner une commande (4) numérique, dans lequel la commande (4) numérique élabore un programme (5) de système, dans lequel la commande (4) numérique en élaborant le programme (5) de système,
a) en utilisant des règles (V1, V2) pour des axes (1) réglés en position d'une machine de production commandée par la commande (4) numérique, détermine un groupe en cours de valeur (xi*) de consigne de position des axes (1) réglés en position et détermine en outre des groupes escomptés pour un horizon (H) de pronostic de valeur (xi*) de consigne de position des axes (1) réglés en position,
b) à la fois contrôle si, lors de la commande des axes (1) réglés en position par le groupe en cours de valeur (xi*) de consigne de position des axes (1) réglés en position, il y a danger d'une collision d'au moins un élément (2, 3) déplacé par la commande des axes (1) réglés en position avec au moins un autre élément (2, 3, 9, 10) et contrôle, si lors de la commande des axes (1) réglés en position par les groupes escomptés de valeur (xi*) de consigne de position des axes (1) réglés en position, il y a danger d'une collision d'au moins un élément (2, 3) déplacé par la commande des axes (1) réglés en position avec au moins un autre élément (2, 3, 9, 10),
c) puis, si elle n'identifie pas au stade b) le danger d'une collision, commande les axes (1) réglés en position par le groupe en cours de valeur (xi*) de consigne de position des axes (1) réglés en position, met les groupes escomptés de valeur (xi*) de consigne de position des axes (1) réglés en position dans une mémoire (11) de voie de freinage et recommence le procédé pour faire fonctionner en commençant par le stade a) et
d) puis, si elle identifie au stade b) le danger d'une collision, fait passer les axes (1) réglés en position dans l'état de repos le long d'une voie (12), qui est définie par des groupes, mis dans la mémoire (11) de voie de freinage, de valeur (xi*) de consigne de position des axes (1) réglés en position,
**caractérisé en ce que**
lorsque les règles (V1, V2) se modifient de manière à ce qu'une voie nouvelle soit déterminée nouvellement par un nouveau groupe en cours de valeur (xi*) de consigne de position des axes (1) réglés en position et des groupes à escompter nouvellement de valeur (xi*) de consigne de position des axes (1) réglés en position et de manière à ce qu'une voie (12) ancienne, telle qu'elle est définie par le contenu de la mémoire (11) de voie de freinage sous la forme d'un groupe en cours ancien de valeur (xi*) de consigne de position des axes (1) réglés en position et de groupes à escompter anciens des valeurs (xi*) de consigne de position des axes (1) réglés en position n'est plus comprise complètement par la voie nouvelle,
dans le cas où on identifie pour la voie nouvelle, lors du contrôle une collision, on lit l'un après l'autre dans la mémoire (11) de voie de freinage suivant leur succession par la commande (4) numérique les groupes, mis dans la mémoire (11) de voie de freinage, de valeur (xi*) de consigne de position des axes (1) réglés en position et on les utilise pour la commande des axes (1) réglés en position.

2. Procédé suivant la revendication 1,
**caractérisé en ce que**
la commande (4) numérique commande des axes (1) réglés en position avec un cycle (T) respectivement renouvelé par un groupe respectif de valeur (xi*) de consigne de position en cours des axes (1) réglés en position, **en ce que** la commande (4) numérique a besoin pour l'exécution du stade b) au maximum d'un premier nombre de cycles (T), et **en ce que** la commande (4) numérique retarde, d'un deuxième nombre de cycles (T) calculé à partir de la détermination d'un nouveau groupe en cours de valeur (xi*) de consigne de position des axes (1) réglés en position, la mise des groupes escomptés de valeur (xi*) de consigne de position des axes (1) réglés en position dans la mémoire (11) de voie de freinage et la commande des axes (1) réglés en position.

3. Procédé suivant la revendication 2,
**caractérisé en ce que**
le deuxième nombre de cycles (T) est tel, que la commande (4) numérique est en mesure de contrôler pendant le deuxième nombre de cycles (T) pendant tout l'horizon (H) de pronostic le point de savoir, si, lors de la commande des axes (1) réglés en position par les groupes escomptés de valeur (xi*) de consigne de position des axes (1) réglés en position, il y a danger d'une collision d'au moins un élément (2, 3) déplacé par la commande des axes (1) réglés en position avec au moins un autre élément (2, 3, 9, 10).

4. Procédé suivant la revendication 2 ou 3,
**caractérisé en ce que**
la commande (4) numérique suit dynamiquement le nombre de cycles en fonction d'une vitesse (v, v') de déplacement d'au moins l'un des axes (1) réglés en position.

5. Produit de programme d'ordinateur
pour une commande (4) numérique, dans lequel
le programme de système comprend un code machine (6), qui peut être élaboré par la commande (4) numérique, dans lequel l'élaboration du code machine (6) par la commande (4) numérique, fait que la commande (4) numérique exécute un procédé suivant l'une des revendications précédentes.

6. Commande numérique, dans laquelle la commande numérique est programmée par un produit de programme d'ordinateur suivant la revendication 5, de manière à ce que la commande numérique exécute un procédé suivant l'une des revendications 1 à 4.

7. Machine de production,
- dans laquelle la machine de production a plusieurs axes (1) réglés en position, au moyen desquels au moins un élément (2, 3) de la machine de production peut être déplacé,
- dans laquelle la machine de production a une commande (4) numérique suivant la revendication 6, par laquelle les axes (1) réglés en position sont commandés.
